(19) **Europäisches Patentamt / European Patent Office / Office européen des brevets**

(11) **EP 2 795 302 B1**

(12) **FASCICULE DE BREVET EUROPEEN**

(45) Date de publication et mention
de la délivrance du brevet:
**18.11.2015   Bulletin 2015/47**

(21) Numéro de dépôt: **12812291.8**

(22) Date de dépôt: **04.12.2012**

(51) Int Cl.:
***G01N 27/00*** *(2006.01)*

(86) Numéro de dépôt international:
**PCT/FR2012/052797**

(87) Numéro de publication internationale:
**WO 2013/093278 (27.06.2013 Gazette 2013/26)**

(54) **PROCEDE DE FABRICATION D'UNE TETE DE CONTROLE D'UN CAPTEUR DE CONTROLE NON DESTRUCTIF A COURANTS DE FOUCAULT**

VERFAHREN ZUR HERSTELLUNG EINES ÜBERWACHUNGSKOPFES EINES ZERSTÖRUNGSFREIEN ÜBERWACHUNGSSENSORS AUF DER BASIS VON WIRBELSTRÖMEN

METHOD OF FABRICATING A MONITORING HEAD OF A NONDESTRUCTIVE MONITORING SENSOR BASED ON EDDY CURRENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **22.12.2011   FR 1162342**

(43) Date de publication de la demande:
**29.10.2014   Bulletin 2014/44**

(73) Titulaire: **Commissariat à l'Énergie Atomique et aux Énergies Alternatives
75015 Paris (FR)**

(72) Inventeur: **DECITRE, Jean-Marc
F-91460 Marcoussis (FR)**

(74) Mandataire: **Bonnet, Michel
Cabinet Bonnet
93, rue Réaumur - Boîte 10
75002 Paris (FR)**

(56) Documents cités:
**EP-A1- 2 056 103     FR-A1- 2 881 826
FR-A1- 2 904 694     US-B1- 6 310 476**

• **WILLIAM F AVRIN: "Eddy current measurements with magneto-resistive sensors: Third-layer flaw detection in a wing-splice structure 25 mm thick", NONDESTRUCTIVE EVALUATION OF AGING AIRCRAFT, AIRPORTS AND AEROSPACE HARDWARE IV, vol. 3994, 1 janvier 2000 (2000-01-01), pages 29-36, XP055032845,**

## Description

La présente invention concerne un procédé de fabrication d'une tête de contrôle d'un capteur de contrôle non destructif à courants de Foucault.

Un capteur de contrôle non destructif de ce type utilise la propriété électromagnétique des courants de Foucault pour la détection de défauts tels que des entailles, fissures ou corrosions dans des structures conductrices de faible épaisseur, pas nécessairement planes, telles que des pièces métalliques aéronautiques ou nucléaires. Par exemple, cette technologie permet l'inspection de tubes de générateurs de vapeur dans des centrales nucléaires.

Une tête de contrôle d'un tel capteur comporte généralement au moins une bobine à fonction d'émission alimentée en courant alternatif et au moins une bobine à fonction de réception dans laquelle circule un courant induit et présentant alors une force électromotrice induite de même fréquence que celle du courant alternatif d'alimentation. Plus précisément, lorsque la tête de contrôle du capteur de contrôle non destructif à courants de Foucault est disposée au voisinage d'une pièce à inspecter, la bobine à fonction d'émission est alimentée en signal sinusoïdal. Un champ électromagnétique de même fréquence est alors émis dans l'air et dans la pièce à inspecter. Il en résulte, aux bornes de la bobine à fonction de réception, une force électromotrice induite provenant, d'une part, du couplage entre la bobine à fonction d'émission et la bobine à fonction de réception (ce couplage étant modifié en présence de la pièce) et, d'autre part, du champ magnétique rayonné par les courants induits dans la pièce et qui traduit l'éventuelle présence d'un défaut dans cette dernière.

Dans une configuration à fonctions d'émission et réception séparées, une tête de contrôle peut comporter une première bobine à fonction d'émission et une seconde bobine à fonction de réception. En mode différentiel de réception, une tête de contrôle de cette configuration peut comporter une première bobine à fonction d'émission et deux autres bobines à fonction de réception montées en différentiel. En mode différentiel d'émission, une tête de contrôle de cette configuration peut comporter deux bobines à fonction d'émission montées en différentiel et une troisième bobine à fonction de réception.

Dans une autre configuration à fonctions d'émission et réception communes, une tête de contrôle peut comporter une première bobine à fonction simultanée d'émission et de réception ainsi qu'une seconde bobine à fonction simultanée de réception et d'émission. En mode différentiel de réception ou d'émission, les deux bobines peuvent être montées en différentiel, par exemple dans un circuit en pont de Wheatstone.

Dans l'une ou l'autre des configurations précitées, un plus grand nombre de bobines peut être envisagé.

Dans tous les cas, la configuration géométrique des bobines peut être optimisée lors de la fabrication d'une tête de contrôle sur certains critères de fonctionnement. Il est en particulier intéressant de concevoir une configuration géométrique des bobines permettant de minimiser la force électromotrice induite dans le circuit à fonction de réception lorsque la tête de contrôle est à une distance nominale prédéterminée d'une pièce à inspecter sans défaut, cette force électromotrice induite étant dans cette situation qualifiée de couplage direct. Il est également intéressant de maximiser toute variation de la force électromotrice induite dans le circuit à fonction de réception quand cette variation est due à la présence d'un défaut type à détecter dans la pièce à inspecter lorsque la tête de contrôle est à cette même distance nominale prédéterminée de la pièce. En effet, cela permet de limiter l'amplification du signal utile que constitue la variation de force électromotrice due à la présence du défaut et de faciliter sa détection.

L'invention s'applique ainsi plus particulièrement à la fabrication de têtes de contrôle comportant au moins deux bobines à fonctions d'émission et/ou réception et concerne un procédé de fabrication comportant les étapes suivantes :

- optimisation d'une configuration géométrique des bobines de la tête de contrôle sur au moins l'un des critères suivants :

  • minimisation d'une force électromotrice E induite dans au moins une bobine à fonction de réception lorsque la tête de contrôle est à une distance nominale prédéterminée d'une pièce à inspecter sans défaut, et
  • maximisation d'une variation $\Delta$se de ladite force électromotrice induite E, cette variation $\Delta$e étant due à la présence d'un défaut type à détecter dans la pièce à inspecter lorsque la tête de contrôle est à ladite distance nominale de la pièce à inspecter,

- fabrication de la tête de contrôle en respectant la configuration géométrique des bobines réalisant cette optimisation.

Un tel procédé de fabrication est par exemple divulgué dans le brevet français publié sous le numéro FR 2 881 827 B1. Plus précisément, dans ce document, un critère de maximisation du module du rapport $\Delta$e/E, lorsque E et $\Delta$e sont exprimées en valeurs complexes, est utilisé pour sélectionner une distance optimale entre les axes respectifs d'une bobine d'émission et d'une bobine de réception. Le signal utile révélateur d'un défaut présente alors l'avantage d'être mono-polaire et très fin permettant ainsi une bonne localisation du défaut.

Mais ce procédé s'applique de façon limitative à une configuration à fonctions d'émission et réception séparées, en mode non différentiel. En outre, il aboutit à une configuration géométrique à recouvrement des deux bobines telle que la tête de contrôle présente un axe privilégié de détection. Par conséquent le capteur n'est pas isotrope, si bien que les signaux utiles révélateurs de deux défauts de même longueur mais d'orientations différentes présentent des amplitudes et des formes qui peuvent être largement différentes. Or, une forme identique (à une rotation près) serait souhaitable, que ce soit pour une détection de tous les défauts présents dans la pièce ou bien pour une estimation de paramètres géométriques de ces défauts.

Un tel procédé de fabrication est également divulgué dans un mode de réalisation du brevet américain publié sous le numéro US 6,310,476 B1. Selon ce mode de réalisation, la configuration des bobines est telle que celles-ci sont toutes coaxiales, mais que la fonction de réception est réalisée par deux bobines montées en mode différentiel. Avec un encombrement optimisé, cette configuration permet de concevoir un capteur isotrope tout en minimisant le couplage direct entre les fonctions d'émission et de réception.

En revanche, elle reste sensible aux variations d'entrefer, c'est-à-dire aux variations de distance entre la tête de contrôle et la pièce à contrôler lorsque le capteur est déplacé au dessus de cette dernière. Or les variations d'entrefer sont inévitables en utilisation courante d'un capteur de contrôle non destructif, par exemple à cause de vibrations ou bien, dans le cas d'une pièce à inspecter de forme complexe, à cause du fait que le capteur, même flexible, ne puisse pas épouser précisément la pièce. Elles sont alors susceptibles de modifier le couplage entre les fonctions d'émission et de réception du capteur et de créer ainsi un bruit préjudiciable à la détection des défauts.

Cette sensibilité aux variations d'entrefer peut être améliorée, comme proposé dans d'autres modes de réalisation du brevet américain publié sous le numéro US 6,310,476 B1, mais au prix d'un nombre plus important de bobines à fonction de réception et donc d'un encombrement plus important. En outre, dans ces autres modes de réalisation, la coaxialité des bobines n'est plus vérifiée.

Un procédé un peu différent est divulgué dans le brevet français publié sous le numéro FR 2 904 694 B1 où une distance entre les bobines d'émission et de réception est optimisée sur la base d'un critère spécifique de minimisation de la sensibilité aux variations d'entrefer.

Mais ce procédé, comme celui décrit dans le document FR 2 881 827 B1, s'applique de façon limitative à une configuration à fonctions d'émission et réception séparées, en mode non différentiel. En outre, il aboutit également à une configuration géométrique présentant un axe privilégié de détection. Enfin, il est incompatible avec celui décrit dans le premier mode de réalisation du document US 6,310,476 B1.

Il peut ainsi être souhaité de prévoir un procédé de fabrication d'une tête de contrôle d'un capteur de contrôle non destructif à courants de Foucault qui permette de s'affranchir d'au moins une partie des problèmes et contraintes précités.

L'invention a donc pour objet un procédé de fabrication d'une tête de contrôle d'un capteur de contrôle non destructif à courants de Foucault, cette tête de contrôle comportant au moins deux bobines à fonctions d'émission et/ou réception, comportant les étapes suivantes :

- optimisation d'une configuration géométrique des bobines de la tête de contrôle sur au moins l'un des critères suivants :

  • minimisation d'une force électromotrice E induite dans au moins une bobine à fonction de réception lorsque la tête de contrôle est à une distance nominale prédéterminée d'une pièce à inspecter sans défaut, et
  • maximisation d'une variation Δe de ladite force électromotrice induite E, cette variation Δe étant due à la présence d'un défaut type à détecter dans la pièce à inspecter lorsque la tête de contrôle est à ladite distance nominale de la pièce à inspecter,

- fabrication de la tête de contrôle en respectant la configuration géométrique des bobines réalisant cette optimisation,

dans lequel :

- l'optimisation de la configuration géométrique des bobines est en outre réalisée sur au moins un critère d'optimisation d'une autre variation ΔE de ladite force électromotrice induite E, cette autre variation ΔE étant due à une variation de distance entre la tête de contrôle et la pièce à inspecter, et
- l'optimisation de la configuration géométrique des bobines comporte l'optimisation de dimensions géométriques de chacune de ces bobines.

Ainsi, l'optimisation de la configuration géométrique des bobines peut être réalisée sur plusieurs paramètres de dimensionnement géométrique des bobines de la tête de contrôle et en fonction de plusieurs critères incluant au moins l'une des grandeurs E ou Δe et la grandeur ΔE. On peut donc, avec une grande souplesse dans les critères d'optimisation et dans les paramètres à optimiser, fabriquer une tête de contrôle présentant une grande sensibilité aux défauts, une faible sensibilité au bruit engendré par les variations d'entrefer et une bonne dynamique de détection.

De façon optionnelle, la configuration géométrique des bobines de la tête de contrôle est préalablement initialisée en imposant au moins l'un des éléments de l'ensemble constitué d'un nombre de bobines, d'une attribution de fonction d'émission et/ou de réception pour chaque bobine et de la coaxialité de toutes les bobines.

En particulier, si la coaxialité des bobines est imposée, un capteur isotrope peut être conçu.

De façon optionnelle également, la configuration géométrique des bobines de la tête de contrôle est optimisée en faisant varier au moins l'un des éléments de l'ensemble constitué des diamètres internes et externes de chaque bobine, de leur nombre de spires, de leur épaisseur, de la distance nominale par rapport à la pièce à inspecter et de la fréquence électrique des courants circulant dans les bobines.

De façon optionnelle également, l'optimisation de la configuration géométrique des bobines de la tête de contrôle est réalisée entre autres sur un critère de minimisation du rapport |E|/|∆e∆, où |E| et |∆e| sont les modules respectifs de E et ∆e exprimées sous forme complexe.

De façon optionnelle également, l'optimisation de la configuration géométrique des bobines de la tête de contrôle est réalisée entre autres sur un critère de minimisation du rapport |∆E|/|∆e|, où |∆E| et |∆e| sont les modules respectifs de ∆E et ∆e exprimées sous forme complexe.

De façon optionnelle également, l'optimisation de la configuration géométrique des bobines de la tête de contrôle est réalisée entre autres sur un critère de minimisation de la différence entre, d'une part, +/- π/2 et, d'autre part, le déphasage entre DUE et ∆e exprimées sous forme complexe.

De façon optionnelle également, l'optimisation de la configuration géométrique des bobines de la tête de contrôle est réalisée entre autres sur un critère de

minimisation du rapport : $\dfrac{\cos[\varphi(\Delta E) - \varphi(\Delta e)]}{|\Delta e|}$ , ou

de façon équivalente du

rapport : $\dfrac{\cot an[\varphi(\Delta E) - \varphi(\Delta e)]}{|\Delta e|}$ , où φ(∆E) et φ(∆e)

sont les phases respectives de ∆E et ∆e exprimées sous forme complexe, |∆e| étant le module de ∆e.

De façon optionnelle également, l'optimisation est réalisée sur la base :

- d'une simulation de la configuration géométrique des bobines de la tête de contrôle permettant d'évaluer ladite force électromotrice induite E, ladite variation ∆e et ladite autre variation ∆E, et
- d'une optimisation, notamment une minimisation, multidimensionnelle non linéaire et non contrainte de type Nelder-Mead, appliquée sur lesdits critères.

De façon optionnelle également, la configuration géométrique des bobines de la tête de contrôle est préalablement initialisée en imposant les contraintes suivantes :

- le nombre de bobines de la tête de contrôle est fixé à trois, dont une bobine d'émission et deux bobines de réception montées en mode différentiel,

- les trois bobines de la tête de contrôle sont annulaires et coaxiales,
- les deux bobines de réception de la tête de contrôle sont en outre coplanaires.

De façon optionnelle également, la configuration géométrique des bobines de la tête de contrôle est préalablement initialisée en imposant les contraintes suivantes :

- le nombre de bobines de la tête de contrôle est fixé à deux, chacune étant à fonction commune d'émission/réception,
- ces deux bobines sont montées en mode différentiel dans un circuit en pont de Wheatstone,
- ces deux bobines sont annulaires, coplanaires et coaxiales.

L'invention sera mieux comprise à l'aide de la description qui va suivre, donnée uniquement à titre d'exemple et faite en se référant aux dessins annexés dans lesquels :

- la figure 1 illustre les étapes successives d'un procédé de fabrication d'une tête de contrôle d'un capteur de contrôle non destructif à courants de Foucault, selon un mode de réalisation de l'invention,
- les figures 2, 3 et 4 sont des diagrammes illustrant, dans un plan complexe, des critères d'optimisation employés dans le procédé de fabrication de la figure 1,
- les figures 5 et 6 sont des diagrammes illustrant, dans un plan complexe, des résultats d'optimisation obtenus par exécution du procédé de fabrication de la figure 1, pour une configuration de tête de contrôle à fonctions d'émission et réception séparées en mode différentiel de réception,
- la figure 7 illustre le résultat de l'exécution du procédé de fabrication de la figure 1, sur la base d'une configuration de tête de contrôle à fonction d'émission/réception commune de ses bobines et en mode différentiel de réception,
- la figure 8 est un diagramme illustrant, dans un plan complexe, un résultat d'optimisation obtenu par exécution du procédé de fabrication de la figure 1, pour la configuration de tête de contrôle de la figure 7, et
- la figure 9 illustre schématiquement le principe de conception, grâce à l'exécution du procédé de fabrication de la figure 1, d'une tête de contrôle multi-éléments matricielle.

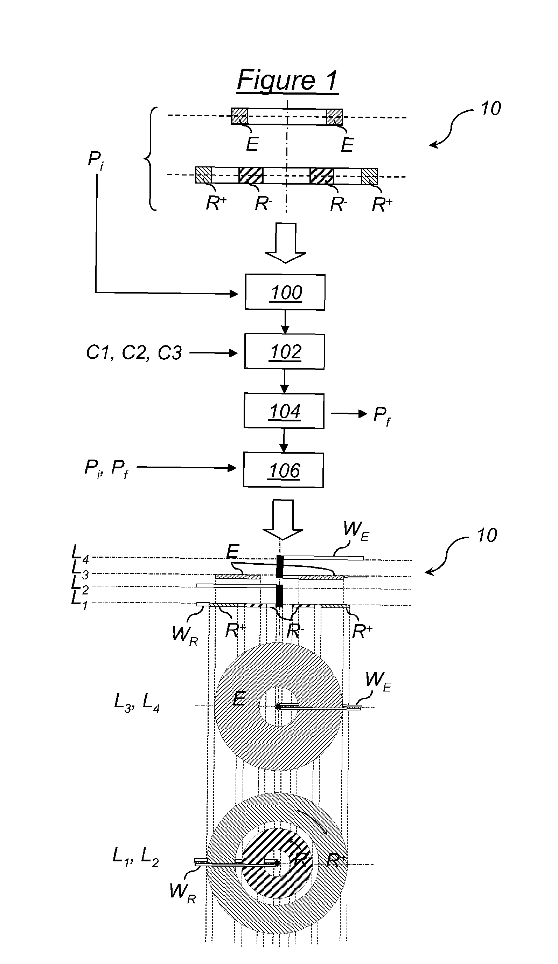

A titre purement illustratif, le procédé de fabrication de la figure 1 est présenté pour la conception particulière d'une tête de contrôle 10 à trois bobines coaxiales, dont une bobine à fonction d'émission et deux bobines à fonction de réception montées en mode différentiel. Mais comme cela sera vu par la suite, ce procédé peut s'appliquer à bien d'autres configurations de têtes de contrôle.

Au cours d'une première étape d'initialisation 100, certains paramètres $P_i$ de la configuration géométrique des bobines de la tête de contrôle 10 sont imposés. Dans l'exemple de la figure 1 précité :

- le nombre de bobines de la tête de contrôle 10 souhaitée est fixé à trois, dont une bobine d'émission E et deux bobines de réception $R^+$ et $R^-$ montées en mode différentiel,
- les trois bobines E, $R^+$ et $R^-$ sont annulaires et coaxiales,
- les deux bobines de réception $R^+$ et $R^-$ sont en outre coplanaires.

D'une façon générale, la configuration géométrique des bobines de la tête de contrôle 10 est préalablement initialisée au cours de cette étape en imposant un nombre de bobines, une attribution de fonction d'émission et/ou de réception pour chaque bobine, une coaxialité d'au moins une partie des bobines ou d'autres paramètres contraignants selon l'application visée ou le cas souhaité. C'est de cette façon qu'un grand nombre de configurations de têtes de contrôle peut être envisagé.

Ensuite, au cours d'une étape d'optimisation 102, sur la base des paramètres $P_i$ imposés à l'étape d'initialisation 100, d'autres paramètres $P_f$, dits finaux, permettant une fabrication concrète de la tête de contrôle 10, sont initialisés et modifiés dans le cadre d'une optimisation multidimensionnelle et à critères multiples de la configuration géométrique des bobines de la tête de contrôle 10.

Ces paramètres finaux $P_f$ comportent notamment au moins des paramètres de dimensions géométriques de chacune des bobines définies à l'étape d'initialisation 100. Ils comportent donc par exemple, lorsque les bobines sont annulaires, les valeurs des diamètres internes et externes de chaque bobine et les valeurs de leurs épaisseurs respectives. Les paramètres finaux peuvent en outre comporter le nombre de spires dans chaque bobine, ou la valeur de la distance nominale entre la tête de contrôle 10 et la pièce à inspecter, lorsqu'une couche protectrice et isolante doit être prévue entre les bobines de la tête de contrôle et la surface de la pièce à inspecter contre laquelle cette couche protectrice et isolante est destinée à être mise en contact. Ils peuvent aussi comporter la valeur de la fréquence électrique des courants circulant dans les bobines, bien que celle-ci puisse être en variante imposée à l'initialisation 100.

Certains des paramètres finaux sont liés entre eux. Par exemple, étant donné qu'un chevauchement des bobines de réception $R^+$ et $R^-$ n'est pas permis compte tenu des paramètres imposés à l'initialisation 100 (elles sont coplanaires), le diamètre externe de la plus petite de ces deux bobines est nécessairement inférieur au diamètre interne de l'autre. D'autres paramètres ont une plage de variation limitée, tels que les nombres de spires.

Dans l'exemple de la figure 1, les critères sur lesquels est réalisée l'optimisation multidimensionnelle de la configuration géométrique des bobines comportent un premier critère noté C1 de :

- minimisation d'une force électromotrice E induite aux bornes du circuit constitué des deux bobines de réception $R^+$ et $R^-$ lorsque la tête de contrôle 10 est à une distance nominale h prédéterminée d'une pièce à inspecter sans défaut, et/ou
- maximisation d'une variation $\Delta e$ de ladite force électromotrice induite E, cette variation $\Delta e$ étant due à la présence d'un défaut type à détecter dans la pièce à inspecter lorsque la tête de contrôle est à la distance nominale h.

Le critère C1 peut alors être qualifié de critère de minimisation du couplage direct E (incluant l'effet du voisinage d'une pièce à inspecter sans défaut) entre les fonctions d'émission et de réception de la tête de contrôle 10, au vu de la mesure $\Delta e$ qui doit être effectuée par la tête de contrôle 10 pour détecter d'éventuels défauts.

A titre d'exemple, le critère C1 peut être plus précisément défini de manière à maximiser la variation $\Delta e$ due à la présence d'un défaut par rapport au couplage direct E, ce qui peut notamment être exprimé à l'aide du ratio $|E|/|\Delta e|$ à minimiser, où $|E|$ et $|\Delta e|$ sont les modules respectifs de E et $\Delta e$ lorsque ces grandeurs sont exprimées sous forme complexe. En variante, le critère C1 peut prendre d'autres formes que le ratio exprimé ci-dessus, une pluralité de formes équivalentes pouvant être imaginées pour maximiser $\Delta e$ par rapport à E.

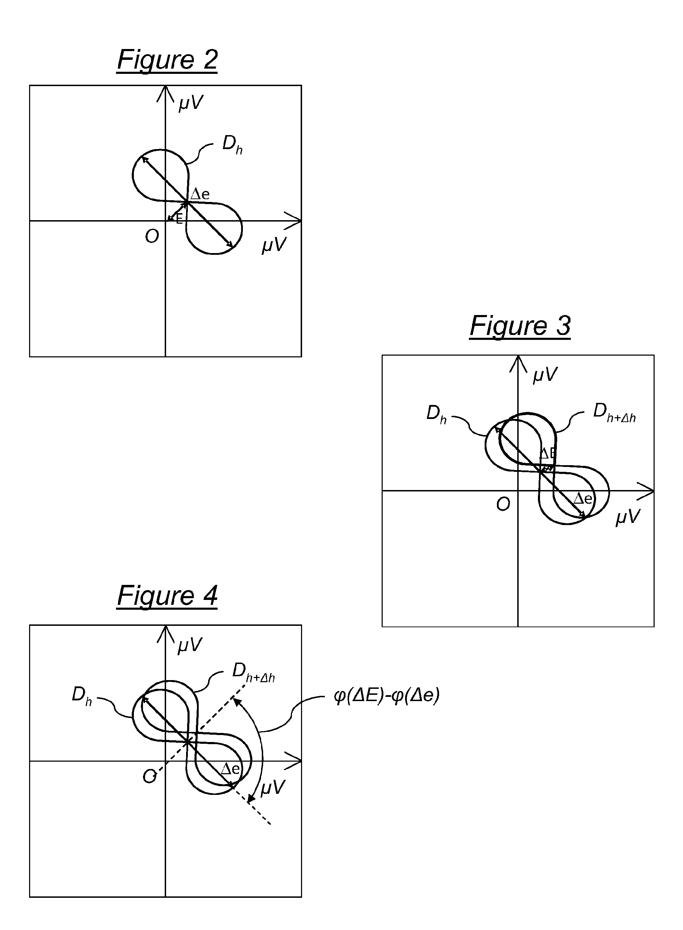

Une illustration de l'optimisation du critère C1 est donnée par la figure 2 dans laquelle un diagramme représente, dans le plan complexe, les variations de la force électromotrice induite E+$\Delta e$ aux bornes du circuit de réception de la tête de contrôle 10 en présence d'un défaut type dans la pièce à inspecter. Le signal caractéristique du défaut type à détecter est la courbe fermée $D_h$ en forme de « 8 ». Sa plus grande dimension donne l'amplitude maximale de la variation de la force électromotrice induite due à la présence du défaut type. Cette amplitude maximale peut être retenue comme valeur de $|\Delta e|$. La distance entre le centre de la courbe $D_h$ (absence de défaut détecté) et le centre O du plan complexe donne la valeur de $|E|$. L'optimisation du critère C1 consiste donc à obtenir la courbe $D_h$ la plus grande possible et la plus proche possible de l'origine O dans le plan complexe.

Dans l'exemple de la figure 1, les critères sur lesquels est réalisée l'optimisation multidimensionnelle de la configuration géométrique des bobines comportent en outre un deuxième critère noté C2 d'optimisation d'une autre variation $\Delta E$ de ladite force électromotrice induite E, cette autre variation $\Delta E$ étant due à une variation de distance entre la tête de contrôle 10 et la pièce à inspecter, par exemple lorsque la tête de contrôle 10 est déplacée par rapport à la pièce.

Le critère C2 peut alors être qualifié de critère de minimisation de la sensibilité de la tête de contrôle 10 aux variations d'entrefer. Il peut en outre être exprimé relativement à la mesure Δe qui doit être effectuée par la tête de contrôle 10 pour détecter d'éventuels défauts.

A titre d'exemple, le critère C2 peut être plus précisément défini de manière à maximiser la variation Δe due à la présence d'un défaut par rapport à la variation ΔE due aux variations d'entrefer, ce qui peut notamment être exprimé à l'aide du ratio |ΔE|/|Δe| à minimiser, où |ΔE| et |Δe| sont les modules respectifs de ΔE et Δe lorsque ces grandeurs sont exprimées sous forme complexe. En variante, le critère C2 peut prendre d'autres formes que le ratio exprimé ci-dessus, une pluralité de formes équivalentes pouvant être imaginées pour maximiser Δe par rapport à ΔE.

Une illustration de l'optimisation du critère C2 est donnée par la figure 3 dans laquelle un diagramme représente, dans le plan complexe, les variations de la force électromotrice induite E+Δe aux bornes du circuit de réception de la tête de contrôle 10 en présence d'un défaut type dans la pièce à inspecter, pour deux valeurs de distance entre la tête de contrôle 10 et la pièce à inspecter, par exemple la distance nominale h précitée et une autre distance h+Δh. On obtient ainsi deux courbes fermées en forme de « 8 » approximativement de même taille mais décalées l'une par rapport à l'autre. La première est la courbe $D_h$ de la figure 2, la seconde est une courbe $D_{h+\Delta h}$ correspondant à la distance h+Δh. La distance entre le centre de la courbe $D_h$ et celui de la courbe $D_{h+\Delta h}$ donne la valeur de |ΔE|, alors que celle de |Δe| est toujours donnée par la plus grande dimension de la courbe $D_h$ (ou $D_{h+\Delta h}$). L'optimisation du critère C2 consiste donc à obtenir que les courbes $D_h$ et $D_{h+\Delta h}$ soient les plus proches possibles l'une de l'autre dans le plan complexe.

Dans l'exemple de la figure 1, les critères sur lesquels est réalisée l'optimisation multidimensionnelle de la configuration géométrique des bobines comportent en outre un troisième critère noté C3 d'optimisation de la variation ΔE.

Le critère C3 peut alors être qualifié, comme le critère C2, de critère de minimisation de la sensibilité de la tête de contrôle 10 aux variations d'entrefer. Il peut en outre lui aussi être exprimé relativement à la mesure Δe qui doit être effectuée par la tête de contrôle 10 pour détecter d'éventuels défauts.

A titre d'exemple, le critère C3 peut être plus précisément défini de manière à optimiser le déphasage entre la variation Δe due à la présence d'un défaut et la variation ΔE due aux variations d'entrefer, de manière à rendre ces deux variations facilement discriminables. En particulier, on souhaite que ce déphasage soit le plus proche possible d'un angle droit, c'est-à-dire +/- π/2. Le critère C3 peut donc notamment être exprimé à l'aide du ratio suivant à minimiser :

$$\frac{\cos[\varphi(\Delta E) - \varphi(\Delta e)]}{|\Delta e|}, \text{ ou}$$

de façon équivalente, $\dfrac{\cot an[\varphi(\Delta E) - \varphi(\Delta e)]}{|\Delta e|}$, où

$\varphi(\Delta E)$ et $\varphi(\Delta e)$ sont les phases respectives de ΔE et Δe exprimées sous forme complexe, |Δe| étant toujours le module de Δe. En variante, le critère C3 peut prendre d'autres formes que l'un des deux ratios exprimés ci-dessus, une pluralité de formes équivalentes pouvant être imaginées pour optimiser le déphasage entre Δe et ΔE.

Une illustration de l'optimisation du critère C3 est donnée par la figure 4 dans laquelle un diagramme représente, dans le plan complexe, les mêmes courbes $D_h$ et $D_{h+\Delta h}$ que dans la figure 3. Mais dans la figure 4, pour la prise en compte du critère C3, c'est le déphasage $\varphi(\Delta E) - \varphi(\Delta e)$ entre Δe et ΔE qui est la valeur pertinente à optimiser en la rapprochant le plus possible d'un angle droit. L'optimisation du critère C3 consiste donc à obtenir que le décalage entre les courbes $D_h$ et $D_{h+\Delta h}$ soit le plus orthogonal possible au vecteur Δe, ce dernier étant de module aussi grand que possible.

Dans l'exemple de la figure 1, les trois critères C1, C2 et C3 sont utilisés lors de l'étape d'optimisation 102. Mais en variante et tout en restant dans le cadre de l'invention, seuls les critères C1 et C2, ou C1 et C3, pourraient être pris en compte.

L'étape d'optimisation 102, multidimensionnelle (par la présence de plusieurs paramètres finaux $P_f$ à optimiser), a priori non linéaire, non contrainte et à critères multiples (par la prise en compte de C1 et C2, ou C1 et C3, ou C1 et C2 et C3), peut être exécutée à l'aide de différents algorithmes connus. De façon pratique, en formalisant cette optimisation sous la forme d'une fonction multidimensionnelle, non linéaire et non contrainte à minimiser, l'algorithme de Nelder-Mead peut être mis en oeuvre à cette étape du procédé de fabrication. En variante, des algorithmes génétiques moins sensibles aux minima locaux peuvent être également mis en oeuvre.

Au cours de cette optimisation des paramètres finaux $P_f$ pour répondre aux critères retenus, la configuration géométrique des bobines est avantageusement simulée pour évaluer le couplage direct E, ladite variation Δe et ladite autre variation ΔE. La simulation se fait par exemple à l'aide du logiciel de simulation de contrôle non destructif connu sous le nom de CIVA (marque déposée), ou de tout autre logiciel de simulation notamment par éléments finis.

L'étape d'optimisation 102 est suivie d'une étape 104 de sélection des paramètres finaux $P_f$ réalisant cette optimisation.

Enfin, au cours d'une étape finale 106, la tête de contrôle 10 est fabriquée en respectant la configuration géométrique des bobines définie par les paramètres initiaux $P_i$ et finaux $P_f$.

Comme illustré sur la figure 1 en partie inférieure, en coupe et en vues de dessus, la tête de contrôle 10 obtenue à l'issue de l'étape de fabrication 106 est réalisée concrètement sur un film flexible de polyimide de 50$\mu$m d'épaisseur présentant quatre couches $L_1$, $L_2$, $L_3$ et $L_4$. L'épaisseur des trois bobines E, $R^+$ et $R^-$ est par exemple égale à l'épaisseur d'une piste de cuivre, soit pour cet exemple 9 $\mu$m. Pour la bobine à fonction d'émission E, le circuit d'émission dans lequel elle est intégrée ainsi que ses spires sont matérialisés par un fil de cuivre $W_E$. Pour les deux bobines à fonction de réception $R^+$ et $R^-$, le circuit de réception dans lequel elles sont montées en mode différentiel ainsi que leurs spires sont matérialisés par un fil de cuivre $W_R$.

Sur la couche inférieure $L_1$, le fil de cuivre $W_R$ s'enroule dans un premier sens à partir du diamètre externe de la bobine $R^+$ jusqu'à son diamètre interne, formant ainsi la bobine $R^+$, puis s'enroule dans un second sens opposé au premier à partir du diamètre externe de la bobine $R^-$ jusqu'à son diamètre interne, formant ainsi la bobine $R^-$. Il remonte ensuite le long de l'axe commun des deux bobines $R^+$ et $R^-$ vers la couche $L_2$, à l'aide d'un via. Cette couche $L_2$ remplit simplement une fonction de routage du fil de cuivre $W_R$ pour la formation du circuit de réception. Sur la couche $L_3$, le fil de cuivre $W_E$ s'enroule dans un sens prédéterminé à partir du diamètre externe de la bobine E jusqu'à son diamètre interne, formant ainsi la bobine E. Il remonte ensuite le long de l'axe de la bobine E, qui est également commun aux deux bobines $R^+$ et $R^-$, vers la couche supérieure $L_4$, à l'aide d'un via. Cette couche supérieure $L_4$ remplit simplement une fonction de routage du fil de cuivre $W_E$ pour la formation du circuit d'émission.

Dans un cadre expérimental, les contraintes suivantes ont en outre été ajoutées :

- le nombre de spires des trois bobines doit être maximal pour augmenter la sensibilité et, pour des raisons technologiques, on fixe à 160 $\mu$m la résolution des spires (largeur piste de cuivre + largeur isolant entre spires),
- les diamètres intérieurs et extérieurs des bobines sont ajustés pour avoir un nombre entier de spires,
- un scotch de polyimide autocollant de 50 $\mu$m d'épaisseur est utilisé pour protéger la face de la tête de contrôle 10 en contact avec la pièce à inspecter,
- le défaut type à détecter dans la pièce est le suivant : défaut surfacique de 1 mm de longueur, 100 $\mu$m d'ouverture et 500 $\mu$m de profondeur,
- la variation d'entrefer $\Delta$h prise en compte dans l'étape d'optimisation 102 est de 25 $\mu$m lors du déplacement de la tête de contrôle 10,
- la fréquence électrique des courants circulant dans les bobines est initialement fixée à 1 MHz, ce paramètre étant également ajusté lors de l'étape d'optimisation 102.

Selon une pondération des trois critères C1, C2 et C3 favorisant les deux premiers, on obtient par exemple à l'étape 104 la configuration géométrique suivante :

Bobine d'émission E : - diamètre interne = 0,3880 mm,

- diamètre externe = 6,3080 mm,
- nombre de spires = 19.

Bobine de réception $R^-$ : diamètre interne = 1,4240 mm,

- diamètre externe = 3,5040 mm,
- nombre de spires = 7.

Bobine de réception $R^+$ : - diamètre interne = 4,3640 mm,

- diamètre externe = 5,4840 mm,
- nombre de spires = 4.

Fréquence électrique optimisée : très proche de 1 MHz.

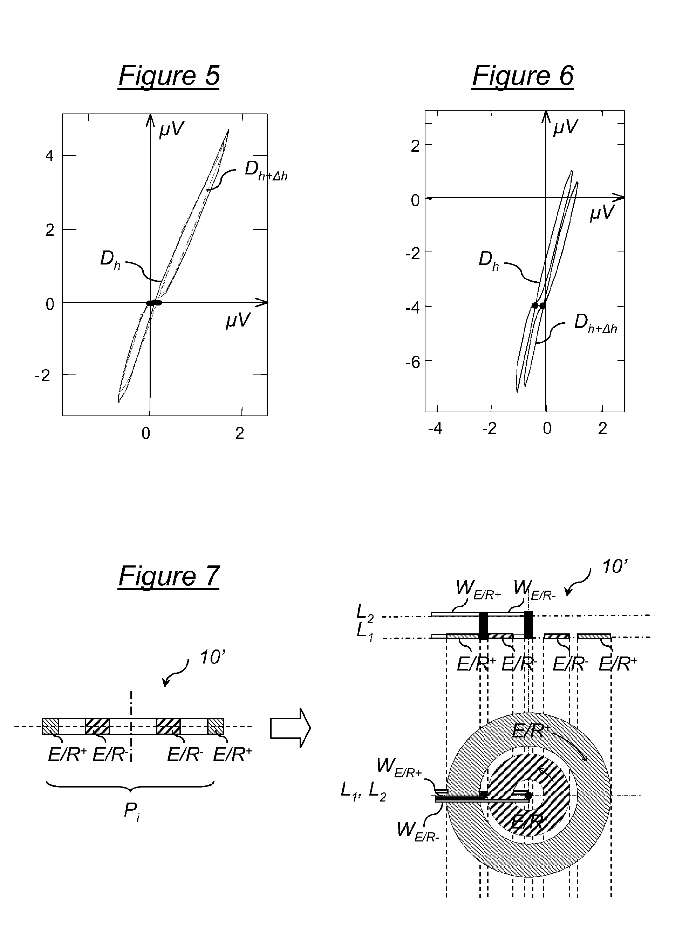

Pour cette configuration, la figure 5 illustre, à l'aide d'un diagramme équivalent à celui de la figure 3 ou 4, les courbes $D_h$ et $D_{h+\Delta h}$, avec h = 50 $\mu$m et $\Delta$h = 25 $\mu$m.

On constate que :

- en l'absence de défaut (centre de la courbe $D_h$), le signal détecté est très proche de l'origine O du plan complexe, donc le couplage direct E est quasi nul,
- de plus, le couplage direct E est très petit devant la variation $\Delta$e due à la présence du défaut type (critère C1 respecté),
- lors d'une variation d'entrefer $\Delta$h, la variation $\Delta$E due à cette variation d'entrefer est très petite devant la variation $\Delta$e due à la présence du défaut type (critère C2 respecté), et
- la différence de phase entre $\Delta$E et $\Delta$e est proche de 5$\pi$/12 (critère C3 respecté dans une moindre mesure).

Selon une autre pondération des trois critères C1, C2 et C3 favorisant le troisième, on obtient par exemple à l'étape 104 la configuration géométrique suivante :

Bobine d'émission E : - diamètre interne = 0,3780 mm,

- diamètre externe = 6,2980 mm,
- nombre de spires = 19.

Bobine de réception $R^-$ : diamètre interne = 1,5180 mm,

- diamètre externe = 3,9180 mm,
- nombre de spires = 8.

Bobine de réception $R^+$ : - diamètre interne = 4,1300 mm,

- diamètre externe = 5,5700 mm,
- nombre de spires = 4.

Fréquence électrique optimisée : très proche de 1 MHz.

Pour cette configuration, la figure 6 illustre, à l'aide d'un diagramme équivalent à celui de la figure 3 ou 4, les courbes $D_h$ et $D_{h+\Delta h}$, avec h = 50 $\mu$m et $\Delta h$ = 25 $\mu$m.

On constate que la différence de phase entre $\Delta E$ et $\Delta e$ est proche de $\pi/2$ (critère C3 respecté), moyennant des valeurs moins optimales de E et $\Delta E$ (critères C1 et C2 respectés dans une moindre mesure).

Le procédé de fabrication de la figure 1 a été présenté pour la conception d'une tête de contrôle 10 à trois bobines coaxiales, dont une bobine à fonction d'émission et deux bobines à fonction de réception montées en mode différentiel. Mais il s'applique également par exemple pour la conception d'une tête de contrôle 10' à deux bobines coaxiales, toutes deux à fonction commune d'émission et de réception, la réception étant assurée en mode différentiel. C'est l'objet de la figure 7 qui illustre schématiquement une telle configuration de tête de contrôle 10'.

Au cours de la première étape d'initialisation 100, certains paramètres $P_i$ de la configuration géométrique des bobines de la tête de contrôle 10' sont imposés. Dans l'exemple de la figure 7 :

- le nombre de bobines de la tête de contrôle 10' souhaitée est fixé à deux, dont une bobine à fonction commune d'émission/réception notée E/R$^+$ et une autre bobine à fonction commune d'émission/réception notée E/R$^-$,
- ces deux bobines sont montées en mode différentiel dans un circuit en pont de Wheatstone,
- les deux bobines E/R$^+$ et E/R$^-$ sont annulaires, coplanaires et coaxiales.

Comme illustré sur la figure 7 en partie droite, en coupe et en vue de dessus, la tête de contrôle 10' obtenue à l'issue de l'étape de fabrication 106 est réalisée concrètement sur un film flexible de polyimide présentant deux couches $L_1$ et $L_2$. L'épaisseur des deux bobines E/R$^+$ et E/R$^-$ est par exemple égale à l'épaisseur d'une piste de cuivre, soit pour cet exemple 9 $\mu$m. Pour la bobine E/R$^+$, le circuit dans lequel elle est intégrée ainsi que ses spires sont matérialisés par un fil de cuivre $W_{E/R+}$. Pour la bobine E/R$^-$, le circuit dans lequel elle est intégrée ainsi que ses spires sont matérialisés par un fil de cuivre $W_{E/R-}$.

Sur la couche inférieure $L_1$, le fil de cuivre $W_{E/R}$ s'enroule dans un premier sens à partir du diamètre externe de la bobine E/R$^+$ jusqu'à son diamètre interne, formant ainsi la bobine E/R$^+$. Il remonte ensuite dans un espace réservé entre les deux bobines vers la couche supérieure $L_2$, à l'aide d'un via. De même, sur la couche inférieure $L_1$, le fil de cuivre $W_{E/R-}$ s'enroule dans un second sens opposé au premier à partir du diamètre externe de la bobine E/R$^-$ jusqu'à son diamètre interne, formant ainsi la bobine E/R$^-$. Il remonte ensuite le long de l'axe commun aux deux bobines E/R$^+$ et E/R$^-$ vers la couche supérieure $L_2$, à l'aide d'un via. La couche supérieure $L_2$ remplit simplement une fonction de routage des fils de cuivre $W_{E/R+}$ et $W_{E/R-}$.

Selon une pondération possible des trois critères C1, C2 et C3, on obtient par exemple à l'étape 104 la configuration géométrique suivante :

Bobine d'émission/réception E/R$^-$ : - diamètre interne = 0,36 mm,

- diamètre externe = 2,44 mm,
- nombre de spires = 7.

Bobine d'émission/réception E/R$^+$ : - diamètre interne = 2,68 mm,

- diamètre externe = 3,80 mm,
- nombre de spires = 4.

Fréquence électrique optimisée : très proche de 1 MHz.

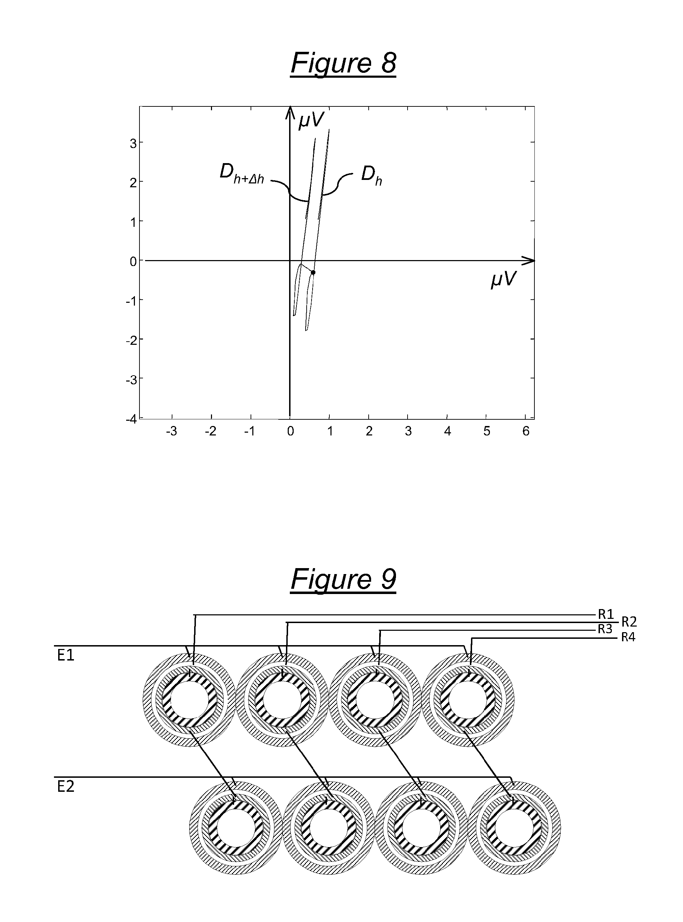

Pour cette configuration, la figure 8 illustre, à l'aide d'un diagramme équivalent à celui de la figure 3 ou 4, les courbes $D_h$ et $D_{h+\Delta h}$, avec h = 50 $\mu$m et $\Delta h$ = 25 $\mu$m.

On constate que :

- en l'absence de défaut (centre de la courbe $D_h$), le signal détecté est relativement proche de l'origine O du plan complexe, donc le couplage direct E est relativement faible,
- de plus, le couplage direct E est relativement petit devant la variation $\Delta e$ due à la présence du défaut type (critère C1 à peu près respecté),
- lors d'une variation d'entrefer $\Delta h$, la variation $\Delta E$ due à cette variation d'entrefer est relativement petite devant la variation $\Delta e$ due à la présence du défaut type (critère C2 à peu près respecté), et
- la différence de phase entre $\Delta E$ et $\Delta e$ est proche de $\pi/2$ (critère C3 bien respecté).

D'une façon générale, le procédé de fabrication de la figure 1 s'applique pour la conception de têtes de contrôle présentant des configurations géométriques très diverses :

- configurations à une bobine d'émission et deux bobines de réception en mode différentiel, comme cela a été vu en référence à la figure 1, mais dans lesquelles les bobines peuvent être ordonnées de différentes façons sur les couches du support, coplanaires ou non, de différentes épaisseurs, etc.,

- configurations à deux bobines d'émission en mode différentiel et une bobine de réception, dans lesquelles les bobines peuvent également être ordonnées de différentes façons sur les couches du support, coplanaires ou non, de différentes épaisseurs, etc.,
- configurations à deux bobines à fonction commune d'émission/réception, comme cela a été vu en référence à la figure 7, mais dans lesquelles les bobines peuvent être ordonnées de différentes façons sur les couches du support, coplanaires ou non, de différentes épaisseurs, etc.,
- configurations à nombre de bobines supérieur à trois.

D'une façon générale également, le procédé de fabrication décrit précédemment convient pour des têtes de contrôle dont les bobines sont de types aussi variés que filaires, imprimées ou gravées sur des supports souples ou rigides.

Un noyau de ferrite coaxial peut également être disposé sur une ou plusieurs des bobines de la tête de contrôle ou même recouvrir l'ensemble des bobines.

Par ailleurs comme illustré sur la figure 9, le motif élémentaire, illustré sur les figures 1 et 8 et obtenu par l'exécution du procédé de fabrication décrit précédemment, peut être répété pour la fabrication d'une tête de contrôle multi-éléments. De plus, dans une configuration à fonctions séparées d'émission et de réception comme c'est le cas de l'exemple de la figure 1, un agencement matriciel avec connexion des éléments en lignes (E1, E2) et en colonnes (R1, R2, R3, R4) est possible selon le même procédé que celui mis en oeuvre et décrit dans le brevet français publié sous le numéro FR 2 904 693 B1. On peut alors envisager de décliner un capteur comportant une telle tête de contrôle en imageur bidimensionnel statique, la coaxialité des bobines permettant en outre de réduire les zones d'ombre (i.e. zones à détection impossible de défauts).

En résumé, il apparaît clairement qu'un procédé de fabrication tel que celui décrit précédemment permet de concevoir des têtes de contrôle de capteurs de contrôle non destructif à courants de Foucault présentant les avantages suivants :

- grande sensibilité aux défauts présents dans la pièce à inspecter,
- faible sensibilité au bruit de variation d'entrefer,
- isotropie,
- grande dynamique, donc présentant un couplage direct faible, pour permettre une bonne amplification des signaux significatifs de défauts,
- déphasage optimal entre les variations de force électromotrice dues aux variations d'entrefer et celles dues aux défauts,
- performance de la configuration géométrique (coaxialité) pour la détection des défauts,

- réalisation facile sur film flexible de polyimide, en trois couches minimum pour les têtes de contrôle à fonctions séparées d'émission et réception, ou deux couches minimum pour les têtes de contrôle à fonction commune d'émission/réception,
- possibilité de connexion simple en matrice pour la réalisation d'imageurs avec un mode de connexion des bobines d'émission par ligne et des bobines de réception, l'image étant alors obtenue par un déplacement selon un axe du capteur,
- grâce au faible encombrement spatial de la configuration géométrique du motif élémentaire, possibilité de concevoir des capteurs de type imageur bidimensionnel statique minimisant les zones d'ombre, réalisables en film flexible de polyimide à couches multiples.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

**Revendications**

1. Procédé de fabrication d'une tête (10) de contrôle d'un capteur de contrôle non destructif à courants de Foucault, cette tête de contrôle comportant au moins deux bobines (E, R$^+$, R$^-$; E/R$^+$, E/R$^-$) à fonctions d'émission et/ou réception, comportant les étapes suivantes :

- optimisation (102) d'une configuration géométrique (P$_i$, P$_f$) des bobines (E, R$^+$, R$^-$; E/R$^+$, E/R$^-$) de la tête de contrôle (10) sur au moins l'un des critères suivants :

• minimisation (C1) d'une force électromotrice E induite dans au moins une bobine à fonction de réception (R$^+$, R$^-$; E/R$^+$, E/R$^-$) lorsque la tête de contrôle (10) est à une distance nominale prédéterminée d'une pièce à inspecter sans défaut,
• maximisation (C1) d'une variation $\Delta$e de ladite force électromotrice induite E, cette variation $\Delta$e étant due à la présence d'un défaut type à détecter dans la pièce à inspecter lorsque la tête de contrôle (10) est à ladite distance nominale de la pièce à inspecter,

- fabrication (106) de la tête de contrôle (10) en respectant la configuration géométrique ($P_i$, $P_f$) des bobines (E, $R^+$, $R^-$; E/$R^+$, E/$R^-$) réalisant (104) cette optimisation (102) et :
- l'optimisation (102) de la configuration géométrique ($P_i$, $P_f$) des bobines (E, $R^+$, $R^-$; E/$R^+$, E/$R^-$) est en outre réalisée sur au moins un critère (C2, C3) d'optimisation d'une autre variation $\Delta E$ de ladite force électromotrice induite E, cette autre variation $\Delta E$ étant due à une variation de distance entre la tête de contrôle (10) et la pièce à inspecter, **caractérisé en ce que** :

- l'optimisation (102) de la configuration géométrique des bobines comporte l'optimisation de dimensions géométriques ($P_f$) de chacune de ces bobines (E, $R^+$, $R^-$; E/$R^+$, E/$R^-$).

2. Procédé de fabrication d'une tête de contrôle (10) selon la revendication 1, dans lequel la configuration géométrique ($P_i$, $P_f$) des bobines (E, $R^+$, $R^-$; E/$R^+$, E/R) de la tête de contrôle (10) est préalablement initialisée (100) en imposant au moins l'un ($P_i$) des éléments de l'ensemble constitué d'un nombre de bobines, d'une attribution de fonction d'émission et/ou de réception pour chaque bobine et de la coaxialité de toutes les bobines.

3. Procédé de fabrication d'une tête de contrôle (10) selon la revendication 1 ou 2, dans lequel la configuration géométrique ($P_i$, $P_f$) des bobines (E, $R^+$, $R^-$; E/$R^+$, E/$R^-$) de la tête de contrôle (10) est optimisée en faisant varier au moins l'un ($P_f$) des éléments de l'ensemble constitué des diamètres internes et externes de chaque bobine, de leur nombre de spires, de leur épaisseur, de la distance nominale par rapport à la pièce à inspecter et de la fréquence électrique des courants circulant dans les bobines.

4. Procédé de fabrication d'une tête de contrôle (10) selon l'une quelconque des revendications 1 à 3, dans lequel l'optimisation (102) de la configuration géométrique ($P_i$, $P_f$) des bobines (E, $R^+$, $R^-$; E/$R^+$, E/$R^-$) de la tête de contrôle (10) est réalisée entre autres sur un critère de minimisation du rapport $|E|/|\Delta e|$, où $|E|$ et $|\Delta e|$ sont les modules respectifs de E et $\Delta e$ exprimées sous forme complexe.

5. Procédé de fabrication d'une tête de contrôle (10) selon l'une quelconque des revendications 1 à 4, dans lequel l'optimisation (102) de la configuration géométrique ($P_i$, $P_f$) des bobines (E, $R^+$, $R^-$; E/$R^+$, E/$R^-$) de la tête de contrôle (10) est réalisée entre autres sur un critère de minimisation du rapport $|\Delta E|/|\Delta e|$, où $|\Delta E|$ et $|\Delta e|$ sont les modules respectifs de $\Delta E$ et $\Delta e$ exprimées sous forme complexe.

6. Procédé de fabrication d'une tête de contrôle (10) selon l'une quelconque des revendications 1 à 5, dans lequel l'optimisation (102) de la configuration géométrique ($P_i$, $P_f$) des bobines (E, $R^+$, $R^-$; E/$R^+$, E/$R^-$) de la tête de contrôle (10) est réalisée entre autres sur un critère de minimisation de la différence entre, d'une part, +/- $\pi$/2 et, d'autre part, le déphasage entre $\Delta E$ et $\Delta e$ exprimées sous forme complexe.

7. Procédé de fabrication d'une tête de contrôle (10) selon l'une quelconque des revendications 1 à 6, dans lequel l'optimisation (102) de la configuration géométrique ($P_i$, $P_f$) des bobines (E, $R^+$, $R^-$; E/$R^+$, E/$R^-$) de la tête de contrôle (10) est réalisée entre autres sur un critère de minimisation du rapport :

$$\frac{\cos[\varphi(\Delta E) - \varphi(\Delta e)]}{|\Delta e|}, \text{ ou de façon équivalente}$$

du rapport : $\dfrac{\cot an[\varphi(\Delta E) - \varphi(\Delta e)]}{|\Delta e|}$, où $\varphi(\Delta E)$

et $\varphi(\Delta e)$ sont les phases respectives de $\Delta E$ et $\Delta e$ exprimées sous forme complexe, $|\Delta e|$ étant le module de $\Delta e$.

8. Procédé de fabrication d'une tête de contrôle (10) selon l'une quelconque des revendications 1 à 7, dans lequel l'optimisation (102) est réalisée sur la base :

- d'une simulation de la configuration géométrique ($P_i$, $P_f$) des bobines (E, $R^+$, $R^-$; E/$R^+$, E/$R^-$) de la tête de contrôle (10) permettant d'évaluer ladite force électromotrice induite E, ladite variation $\Delta e$ et ladite autre variation $\Delta E$, et
- d'une optimisation, notamment une minimisation, multidimensionnelle non linéaire et non contrainte de type Nelder-Mead, appliquée sur lesdits critères (C1, C2, C3).

9. Procédé de fabrication d'une tête de contrôle (10) selon l'une quelconque des revendications 1 à 8, dans lequel la configuration géométrique ($P_i$, $P_f$) des bobines (E, $R^+$, $R^-$; E/$R^+$, E/$R^-$) de la tête de contrôle (10) est préalablement initialisée (100) en imposant les contraintes suivantes :

- le nombre de bobines de la tête de contrôle est fixé à trois, dont une bobine d'émission (E) et deux bobines de réception ($R^+$, $R^-$) montées en mode différentiel,

- les trois bobines (E, R⁺, R⁻) de la tête de contrôle (10) sont annulaires et coaxiales,
- les deux bobines de réception (R⁺, R⁻) de la tête de contrôle (10) sont en outre coplanaires.

10. Procédé de fabrication d'une tête de contrôle (10) selon l'une quelconque des revendications 1 à 8, dans lequel la configuration géométrique ($P_i$, $P_f$) des bobines (E, R⁺, R⁻; E/R⁺, E/R⁻) de la tête de contrôle (10) est préalablement initialisée (100) en imposant les contraintes suivantes :

    - le nombre de bobines de la tête de contrôle est fixé à deux, chacune (E/R⁺, E/R⁻) étant à fonction commune d'émission/réception,
    - ces deux bobines (E/R⁺, E/R⁻) sont montées en mode différentiel dans un circuit en pont de Wheatstone,
    - ces deux bobines (E/R⁺, E/R⁻) sont annulaires, coplanaires et coaxiales.

**Patentansprüche**

1. Verfahren zur Herstellung eines Überwachungskopfs (10) eines zerstörungsfreien Überwachungssensors mit Wirbelströmen, wobei dieser Überchungskopf mindestens zwei Spulen (E, R⁺, R-; E/R⁺, E/R⁻) mit Sende- und/oder Empfangsfunktionen umfasst, das die folgenden Schritte umfasst:

    - Optimierung (102) einer geometrischen Konfiguration ($P_i$, $P_f$) der Spulen (E, R⁺, R-; E/R⁺, E/R⁻) des Überwachungskopfs (10) gemäß mindestens einem der folgenden Kriterien:

        • Minimierung (C1) einer elektromotorischen Kraft E, die in mindestens einer Spule mit Empfangsfunktion (R⁺, R⁻; E/R⁺, E/R⁻) induziert wird, wenn sich der Überwachungskopf (10) in einer vorbestimmten Nennentfernung von einem fehlerlosen zu inspizierenden Teil befindet,
        • Maximierung (C1) einer Variation $\Delta e$ der induzierten elektromotorischen Kraft E, wobei diese Variation $\Delta e$ auf die Gegenwart eines Typfehlers, der in dem zu inspizierenden Teil gegenwärtig ist, zurückzuführen ist, wenn sich der Überwachungskopf (10) in der Nennentfernung von dem zu inspizierenden Teil befindet,

    - Herstellung (106) des Überwachungsgeräts (10) unter Einhaltung der geometrischen Konfiguration ($P_i$, $P_f$) der Spulen (E, R⁺, R-; E/R⁺, E/R⁻), die diese Optimierung (102) durchführen (104), und
    - wobei die Optimierung (102) der geometrischen Konfiguration ($P_i$, $P_f$) der Spulen (E, R⁺, R⁻; E/R⁺, E/R⁻) außerdem gemäß mindestens einem Optimierungskriterium (C2, C3) einer anderen Variation $\Delta E$ der induzierten elektromotorischen Kraft E ausgeführt wird, wobei diese andere Variation $\Delta E$ auf eine Entfernungsvariation zwischen dem Überwachungskopf (10) und dem zu inspizierenden Teil zurückzuführen ist,

**dadurch gekennzeichnet, dass**:

    - die Optimierung (102) der geometrischen Konfiguration der Spulen die Optimierung geometrischer Maße ($P_f$) jeder der Spulen (E, R⁺, R⁻; E/R⁺, E/R⁻) umfasst.

2. Verfahren zur Herstellung eines Überwachungskopfs (10) nach Anspruch 1, wobei die geometrische Konfiguration ($P_i$, $P_f$) der Spulen (E, R⁺, R-; E/R⁺, E/R) des Überwachungsgeräts (10) zuvor initialisiert wird (100), indem man eines ($P_i$) der Elemente der Einheit auferlegt, die aus einer Anzahl von Spulen, einer Sende- und/oder Empfangsfunktion für jede Spule und der Koaxialität der Spulen besteht.

3. Verfahren zur Herstellung eines Überwachungskopfs (10) nach Anspruch 1 oder 2, wobei die geometrische Konfiguration ($P_i$, $P_f$) der Spulen (E, R⁺, R-; E/R⁺, E/R⁻) des Überwachungskopfs (10) optimiert wird, indem man mindestens ein Element ($P_i$) der Elemente der Einheit auferlegt, die aus dem Innendurchmesser und dem Außendurchmessern jeder Spule, ihrer Anzahl Windungen, ihrer Stärke, der Nennentfernung in Bezug auf das zu inspizierende Teil und der elektrischen Frequenz der Ströme, die in den Spulen zirkulieren, besteht.

4. Verfahren zur Herstellung eines Überwachungskopfs (10) nach einem der Ansprüche 1 bis 3, bei dem die Optimierung (102) der geometrischen Konfiguration ($P_i$, $P_f$) der Spulen (E, R⁺, R-; E/R⁺, E/R⁻) des Überwachungskopfs (10) unter anderem gemäß einem Minimierungskriterium des Verhältnisses $|E|/|\Delta e|$ ausgeführt wird, wobei $|E|$ und $|\Delta e|$ jeweilige Module von E und $\Delta e$ ausgedrückt in komplexer Form sind.

5. Verfahren zur Herstellung eines Überwachungskopfs (10) nach einem der Ansprüche 1 bis 4, wobei die Optimierung (102) der geometrischen Konfiguration ($P_i$, $P_f$) der Spulen (E, R⁺, R-; E/R⁺, E/R⁻) des Steuerkopfes (10) unter anderem gemäß einem Minimierungskriterium des Verhältnisses $|\Delta E|/|\Delta e|$ ausgeführt wird, wobei $|\Delta E|$ und $|\Delta e|$ jeweilige Module von E und $\Delta e$ ausgedrückt in komplexer Form sind.

6. Verfahren zur Herstellung eines Überwachungskopfs (10) nach einem der Ansprüche 1 bis 5, wobei die Optimierung (102) der geometrischen Konfiguration ($P_i$, $P_f$) der Spulen (E, R$^+$, R$^-$; E/R$^+$, E/R$^-$) des Überwachungskopfs (10) unter anderem gemäß einem Minimierungskriterium des Unterschieds zwischen einerseits $\pm\,\pi/2$ und andererseits der Phasenverschiebung zwischen $\Delta$E und $\Delta$e ausgedrückt in komplexer Form ausgeführt wird.

7.  Verfahren zur Herstellung eines Überwachungskopfs (10) nach einem der Ansprüche 1 bis 6, wobei die Optimierung (102) der geometrischen Konfiguration ($P_i$, $P_f$) der Spulen (E, R$^+$, R$^-$; E/R$^+$, E/R$^-$) des Überwachungskopfs (10) unter anderem gemäß einem Minimierungskriterium des folgenden Verhältnisses ausgeführt wird: $\dfrac{\cos\left[\varphi(\Delta E)-\varphi(\Delta e)\right]}{|\Delta e|}$ ,

oder äquivalent des Verhältnisses: $\dfrac{\cot an\left[\varphi(\Delta E)-\varphi(\Delta e)\right]}{|\Delta e|}$ , wobei $\varphi(\Delta E)$ und $\varphi(\Delta e)$ die jeweiligen Phasen von $\Delta$E und $\Delta$e ausgedrückt in komplexer Form sind, wobei $|\Delta e|$ das Modul von $\Delta$e ist.

8.  Verfahren zur Herstellung eines Überwachungskopfs (10) nach einem der Ansprüche 1 bis 7, wobei die Optimierung (102) auf der folgenden Basis ausgeführt wird:

    - eine Simulation der geometrischen Konfiguration ($P_i$, $P_f$) der Spulen (E, R$^+$, R$^-$; E/R$^+$, E/R$^-$) des Überwachungskopfs (10), die das Schätzen der induzierten elektromotorischen Kraft E, der Variation $\Delta$e und der anderen Variation $\Delta$E erlaubt, und
    - eine Optimierung, insbesondere eine multidimensionale nicht lineare und nicht auferlegte Minimierung des Typs Nelder-Mead, die an die Kriterien (C1, C2, C3) angewandt wird.

9.  Verfahren zur Herstellung eines Überwachungskopfs (10) nach einem der Ansprüche 1 bis 8, wobei die geometrische Konfiguration ($P_i$, $P_f$) der Spulen (E, R$^+$, R$^-$; E/R$^+$, E/R$^-$) des Überwachungskopfs (10) zuvor unter Auferlegung der folgenden Auflagen initialisiert wird (100) :

    - die Spulenanzahl der Überwachungsköpfe ist auf drei festgelegt, darunter eine Sendespule (E) und zwei Empfangsspulen (R$^+$, R$^-$), die in differenziellem Modus montiert sind,
    - die drei Spulen (E, R$^+$, R$^-$) des Überwachungskopfs (10) sind ringförmig und koaxial,
    - die zwei Empfangsspulen (R$^+$, R$^-$) des Überwachungskopfs (10) sind außerdem koplanar.

10. Verfahren zur Herstellung eines Überwachungskopfs (10) nach einem der Ansprüche 1 bis 8, wobei die geometrische Konfiguration ($P_i$, $P_f$) der Spulen (E, R$^+$, R$^-$; E/R$^+$, E/R$^-$) des Überwachungskopfs (10) zuvor unter Auferlegung der folgenden Auflagen initialisiert wird (100):

    - die Spulenanzahl der Überwachungsköpfe ist auf zwei festgelegt, wobei jede Spule (E/R$^+$, E/R$^-$) eine gemeinsame Sende-/Empfangsfunktion hat,
    - die zwei Spulen (E/R$^+$, E/R$^-$) sind im differenziellen Modus in einer Wheatstone-Brückenschaltung montiert,
    - die zwei Spulen (E/R$^+$, E/R$^-$) sind ringförmig, koplanar und koaxial.

## Claims

1.  Method for manufacturing a testing head (10) of a non-destructive testing sensor based on eddy currents, this testing head comprising at least two coils (E, R$^+$, R$^-$; E/R$^+$, E/R$^-$) having transmission and/or receiving functions, comprising the following steps:

    - optimizing (102) a geometric design ($P_i$, $P_f$) of the coils (E, R$^+$, R$^-$; E/R$^+$, E/R$^-$) of the testing head (10) based on at least one of the following criteria:

        • minimizing (C1) an electromotive force E induced in at least one coil having a receiving function (R$^+$, R$^-$; E/R$^+$, E/R$^-$) when the testing head (10) is at a predetermined nominal distance from a part to be inspected free from defects,
        • maximizing (C1) a variation $\Delta$e of said induced electromotive force E, this variation $\Delta$e being due to the presence of a standard defect to be detected in the part to be inspected when the testing head (10) is at said nominal distance from the part to be inspected,

    - manufacturing (106) the testing head (10) in accordance with the geometric design ($P_i$, $P_f$) of the coils (E, R$^+$, R$^-$; E/R$^+$, E/R$^-$) carrying out (104) this optimization (102), and
    - the optimization (102) of the geometric design ($P_i$, $P_f$) of the coils (E, R$^+$, R$^-$; E/R$^+$, E/R$^-$) is further carried out based on at least one criterion (C2, C3) for optimizing a further variation $\Delta$E of said induced electromotive force E, this further variation $\Delta$E being due to a variation in distance between the testing head (10) and the part to be inspected,

**characterized in that**:

- the optimization (102) of the geometric design of the coils comprises optimization of geometric dimensions ($P_f$) of each of these coils (E, R+, R-; E/R+, E/R-).

2. Method for manufacturing a testing head (10) according to claim 1, wherein the geometric design ($P_i$, $P_f$) of the coils (E, R+, R-; E/R+, E/R) of the testing head (10) is previously set (100) by imposing at least one ($P_i$) of the elements of the set consisting of a number of coils, an allocation in respect of transmission and/or receiving function for each coil and the coaxiality of all the coils.

3. Method for manufacturing a testing head (10) according to claim 1 or 2, wherein the geometric design ($P_i$, $P_f$) of the coils (E, R+, R-; E/R+, E/R-) of the testing head (10) is optimized by varying at least one ($P_f$) of the elements of the set consisting of the internal and external diameters of each coil, the number of turns thereof, the thickness thereof, the nominal distance relative to the part to be inspected and the electrical frequency of the currents flowing in the coils.

4. Method for manufacturing a testing head (10) according to any of claims 1 to 3, wherein the optimization (102) of the geometric design ($P_i$, $P_f$) of the coils (E, R+, R-; E/R+, E/R-) of the testing head (10) is carried out inter alia based on a criterion for minimizing the ratio |E|/|$\Delta$e|, where |E| and |$\Delta$e| are the respective moduli of E and $\Delta$e expressed in complex form.

5. Method for manufacturing a testing head (10) according to any of claims 1 to 4, wherein the optimization (102) of the geometric design ($P_i$, $P_f$) of the coils (E, R+, R-; E/R+, E/R-) of the testing head (10) is carried out inter alia based on a criterion for minimizing the ratio |$\Delta$E|/|$\Delta$e|, where |$\Delta$E| and |$\Delta$e| are the respective moduli of $\Delta$E and $\Delta$e expressed in complex form.

6. Method for manufacturing a testing head (10) according to any of claims 1 to 5, wherein the optimization (102) of the geometric design ($P_i$, $P_f$) of the coils (E, R+, R-; E/R+, E/R-) of the testing head (10) is carried out inter alia based on a criterion for minimizing the difference between, on one hand, +/- $\pi$/2 and, on the other, the phase shift between $\Delta$E and $\Delta$e expressed in complex form.

7. Method for manufacturing a testing head (10) according to any of claims 1 to 6, wherein the optimization (102) of the geometric design ($P_i$, $P_f$) of the coils (E, R+, R-; E/R+, E/R-) of the testing head (10) is carried out inter alia based on a criterion for minimizing the ratio: $\dfrac{\cos\left[\varphi(\Delta E) - \varphi(\Delta e)\right]}{|\Delta e|}$, or in an equivalent manner the ratio:

$$\frac{\cot an\left[\varphi(\Delta E) - \varphi(\Delta e)\right]}{|\Delta e|},$$

where $\varphi(\Delta E)$ and $\varphi(\Delta e)$ are the respective phases of $\Delta E$ and $\Delta e$ expressed in complex form, |$\Delta$e| being the modulus of $\Delta$e.

8. Method for manufacturing a testing head (10) according to any of claims 1 to 7, wherein the optimization (102) is carried out on the basis of:

- a simulation of the geometric design ($P_i$, $P_f$) of the coils (E, R+, R-; E/R+, E/R-) of the testing head (10) suitable for evaluating said induced electromotive force E, said variation $\Delta$e and said further variation $\Delta$E, and
- a non-linear and non-constrained Nelder-Mead type multidimensional optimization, particularly a minimization, applied to said criteria (C1, C2, C3).

9. Method for manufacturing a testing head (10) according to any of claims 1 to 8, wherein the geometric design ($P_i$, $P_f$) of the coils (E, R+, R-; E/R+, E/R-) of the testing head (10) is previously set (100) by applying the following constraints:

- the number of coils of the testing head is set to three, including one transmission coil (E) and two receiving coils (R+, R-) mounted in differential mode,
- the three coils (E, R+, R-) of the testing head (10) are annular and coaxial,
- the two receiving coils (R+, R-) of the testing head (10) are further coplanar.

10. Method for manufacturing a testing head (10) according to any of claims 1 to 8, wherein the geometric design ($P_i$, $P_f$) of the coils (E, R+, R-; E/R+, E/R-) of the testing head (10) is previously set (100) by applying the following constraints:

- the number of coils of the testing head is set to two, each (E/R+, E/R-) having a common transmission/receiving function,
- these two coils (E/R+, E/R-) are mounted in differential mode in a Wheatstone bridge circuit,
- these two coils (E/R+, E/R-) are annular, coplanar and coaxial.

## Figure 1

## Figure 2

## Figure 3

## Figure 4

## Figure 5

## Figure 6

## Figure 7

## Figure 8

## Figure 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2881827 B1
- US 6310476 B1
- FR 2904694 B1
- FR 2904693 B1